# EUROPÄISCHE PATENTSCHRIFT

(11) **EP 4 305 326 B1**
(45) Veröffentlichungstag und Bekanntmachung des Hinweises auf die Patenterteilung: **14.08.2024**
(21) Anmeldenummer: 22711526.8
(22) Anmeldetag: 08.03.2022
(51) Int. Cl.: F16H 57/04

(54) **ÜBERTRAGUNGSVORRICHTUNG MIT EINER SCHWIMMENDEN BUCHSE FÜR VERSORGUNGSMITTEL ZWISCHEN BAUTEILEN EINES PLANETENGETRIEBES**
TRANSMISSION DEVICE WITH A FLOATING BUSHING FOR SUPPLY BETWEEN COMPONENTS OF A PLANETARY GEAR
DISPOSITIF DE TRANSMISSION DOTÉ D'UNE DOUILLE FLOTTANTE POUR UN MOYEN D'ALIMENTATION ENTRE LES COMPOSANTS D'UN TRAIN ÉPICYCLOÏDAL

(30) Priorität: 09.03.2021 EP 21161428
(43) Veröffentlichungstag der Anmeldung: 17.01.2024
(73) Patentinhaber: Flender GmbH, 46395 Bocholt (DE)
(72) Erfinder: HITPASS, Florian, 46395 Bocholt (DE); TELAAR, Carolin, 46395 Bocholt (DE)
(74) Vertreter: Michalski Hüttermann & Partner Patentanwälte mbB
(86) Internationale Anmeldenummer: PCT/EP2022/055821
(87) Internationale Veröffentlichungsnummer: WO 2022/189398

(56) Entgegenhaltungen:
- EP-B1- 3 042 105
- EP-B1- 3 056 763
- CN-A- 101 338 812
- DE-A1- 10 260 132
- DE-A1- 102010 043 816
- DE-A1- 102011 118 832
- US-B2- 10 808 828

## Beschreibung

Die Erfindung betrifft ein Planetengetriebe mit einer Übertragungsvorrichtung zum Übertragen eines Versorgungsmittels. Die Erfindung betrifft weiter einen Antriebsstrang, aufweisend eine elektrische Maschine und ein derartiges Planetengetriebe. Ferner betrifft die Erfindung eine Windkraftanlage mit einem derartigen Planetengetriebe oder einem derartigen Antriebsstrang.

Bei Getrieben ist eine Schmiermittelverteilung und/oder Kühlmittelverteilung im Innern des Getriebes heutzutage ab einer bestimmten radialen und axialen Relativbewegung von stationären und rotierenden Komponenten bzw. rotierenden Komponenten nicht möglich. Durch die mittlerweile sehr kompakt aufgebauten und hochleistungsdichten Getriebe, insbesondere bei Planetengetrieben mit mehr als zwei Planetenstufen, steht für diese Verteilung nur noch beschränkt Bauraum zur Verfügung. Schmiermittel und Kühlmittel werden allgemein auch als Versorgungsmittel bezeichnet.

Die bekannten Systeme zur Verteilung von Versorgungsmitteln wie beispielsweise das doppelte Pitchrohrsystem sind in der Anwendung bei Planentengetrieben aufgrund derer starken Abhängigkeit vom Sonneninnendurchmesser sowie der heutigen Getriebeausführung in Form eines Hybrid Drives mit direkt angebundenem Generator nicht möglich.

Darüber hinaus ist eine Anforderung an die Verteilung von Versorgungsmitteln innerhalb eines Getriebes, dass diese möglichst leckagearm ausgeführt ist.

Aus DE 10 2010 043 816 A1 ist ein Getriebe mit einer Schmiermittelführung bekannt, die eine in einem Getriebegehäuse eingebrachte Schmiermittelbohrung aufweist, die in einer an einer Außenseite einer relativ vedrehbaren Hohlwelle einer Abtriebsstufe vorgesehenen Ringnut mündet. Die Ringnut ist in axialer Richtung zwischen zwei in jeweils einer Dichtnut der Hohlwelle eingesetzten Dichtringen ausgebildet und in axialer Richtung abgedichtet. Von der Ringnut verlaufen mehrere Bohrungen zu einer Innenseite der Hohlwelle, wobei an der Innenseite der Hohlwelle ein mitdrehender Schmierkanalträger dichtend angesetzt ist. Zwischen der Innenseite der Hohlwelle und dem Schmierkanalträger ist ein Ringspalt ausgebildet, so dass das Schmiermittel zu einer zur Abtriebsstufe axial versetzten eingangsseitigen Antriebsstufe des Getriebes geführt werden kann.

Der Erfindung liegt die Aufgabe zugrunde, die Übertragung und Verteilung von Versorgungsmitteln im Innern von Planetengetrieben zu verbessern.

Die Lösung der Aufgabe erfolgt durch ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann, ohne vom Schutzumfang der Ansprüche abzuweichen.

Ein Aspekt der Erfindung betrifft ein Planetengetriebe mit einer Übertragungsvorrichtung zum Übertragen eines Versorgungsmittels zwischen einem ersten Getriebeteil des Planetengetriebes und einem zweiten Getriebeteil des Planetengetriebes, wobei das erste Getriebeteil und das zweite Getriebeteil im Betrieb des Planetengetriebe eine rotatorische Relativbewegung zueinander aufweisen und jeweils zumindest teilweise einen Teil der Übertragungsvorrichtung ausbilden, wobei die Übertragungsvorrichtung eine Ringnut an der Oberfläche des ersten Getriebeteils oder an der Oberfläche des zweiten Getriebeteils aufweist, wobei die Übertragungsvorrichtung über den Umfang verteilte Bohrungen, wobei die über den Umfang verteilten Bohrungen gegenüber der Ringnut angeordnet sind, wobei das erste Getriebeteil eine zum zweiten Getriebeteil weisende separate Buchse zum Übertragen des Versorgungsmittels aufweist, wobei axial beidseitig von der Ringnut jeweils eine Dichtnut in der Buchse ausgebildet ist, wobei in den Dichtnuten jeweils ein Dichtring angeordnet ist, wobei die Buchse drehfest ruhend an dem übrigen ersten Getriebeteil angeordnet ist, wobei die Buchse in axialer Richtung schwimmend mit ausreichend Spiel zum Verkippen aus einer zum ersten Getriebeteil und/oder zum zweiten Getriebeteil koaxialen Relativlage im Ausmaß einer Relativbeweglichkeit des jeweiligen Dichtrings innerhalb der zugehörigen Dichtnut ausgebildet ist.

Ein weiterer Aspekt der Erfindung betrifft einen Antriebsstrang, aufweisend eine elektrische Maschine und ein derartiges Planetengetriebe, wobei ein Rotor der elektrischen Maschine kraftschlüssig und/oder formschlüssig mit einer Welle des Planetengetriebes verbunden ist. Ein weiterer Aspekt der Erfindung betrifft eine Windkraftanlage mit einem derartigen Planetengetriebe oder einem derartigen Antriebsstrang.

Der Erfindung liegt unter anderem die Erkenntnis zugrunde, dass die Verteilung eines Versorgungsmittel wie beispielsweise Öl, das zur Schmierung und/oder Kühlung im Innern eines Planetengetriebes dient, durch die vorgeschlagene Übertragungsvorrichtung verbessert werden kann. Diese Übertragungsvorrichtung ist im Planetengetriebe angeordnet und erstreckt sich über ein erstes Getriebeteil und ein zweites Getriebeteil, die relativ zueinander drehbar im Innern des Planetengetriebes angeordnet sind. Dabei können diese beispielsweise sowohl beidseitig oder einseitig gelagert sein als auch in einer frei gelagerten Ausführung angeordnet sein. Insbesondere ist eines der Getriebeteile feststehend, das heißt unbeweglich ausgeführt. Beispielsweise ist eines der Getriebeteile als ein unbeweglich feststehendes Getriebegehäuse ausgebildet. Die Relativbewegung zwischen dem ersten Getriebeteil und dem zweiten Getriebeteil entspricht einer Rotationsbewegung. In einem einfachen Fall kann es sich dabei um den mit der Eingangswelle und der Ausgangswelle verbundene Teil eines Planetengetriebes handeln. Dabei kann beispielsweise die Eingangswelle mit dem Planetenträger verbunden sein und die Ausgangswelle mit dem Sonnenrad, während das Hohlrad eine feststehende Komponente bildet, die beispielsweise mit dem Gehäuse verbunden ist. Ebenso ist es möglich und auch, wie in einem der folgenden Absätze näher erläutert, besonders vorteilhaft, wenn das Planetengetriebe zweistufig oder mit noch mehr Stufen ausgeführt ist, wobei die Planetenträger der jeweiligen Stufen jeweils zumindest einen Teil des ersten bzw. zweiten Getriebeteils bilden.

Allen diesen genannten Beispielen ist gemeinsam, dass das erste Getriebeteil und das zweite Getriebeteil im Betrieb eine Relativbewegung zueinander aufweisen, die einer Rotationsbewegung entspricht. Hierbei kann das erste Getriebeteil in Strömungsrichtung des Versorgungsmittels stromaufwärts zu dem zweiten Getriebeteil vorgesehen sein. Alternativ kann das erste Getriebeteil in Strömungsrichtung des Versorgungsmittels stromabwärts zu dem zweiten Getriebeteil vorgesehen sein. Mit der vorgeschlagenen Übertragungsvorrichtung ist es dabei möglich, ein Versorgungsmittel wie beispielsweise Öl von dem ersten Getriebeteil zum zweiten Getriebeteil leckagearm zu übertragen. Dazu befindet sich auf dem einen Getriebeteil mindestens eine Ringnut, die sich um das Getriebeteil erstreckt. Die Ringnut ist an einer Stelle des entsprechenden Getriebeteils angeordnet, an der sich das erste Getriebeteil und das zweite Getriebeteil zumindest abschnittsweise radial überlappen. Auf der Seite des anderen Teils befinden sich dann Bohrungen über den Umfang verteilt, die zu der Ringnut fluchtend angeordnet sind. Fluchtend bedeutet in diesem Zusammenhang, dass die Bohrungen über der Ringnut liegen und das Versorgungsmittel von der Ringnut in die Bohrungen strömen kann und umgekehrt. Ein leichter Versatz der Bohrungen und der Ringnut zueinander kann dabei vorhanden sein, sofern zumindest ein Teil der Bohrung sich derart an die Ringnut anschließt, dass ein Austausch von dem Versorgungsmittel zwischen Ringnut und den Bohrungen strömungstechnisch möglich ist.

Aufgrund der Abstände zwischen dem ersten Getriebeteil und dem zweiten Getriebeteil ist mit einem Leckageanteil am Versorgungsmittel zu rechnen, dass nicht zwischen Ringnut und Bohrung strömt sondern den Zwischenraum zwischen der ersten und dem zweiten Getriebeteil nutzt, um zu entweichen. Dieses Entweichen wird als Leckage bezeichnet.

Um die Leckage zu vermeiden bzw. zu verringern, d.h. um die Übertragungsvorrichtung leckagearm auszuführen werden am ersten Getriebeteil zwei oder mehr Dichtnuten angeordneten. Das Getriebeteil kann insbesondere auch zwei, drei oder mehr Dichtnuten aufweisen, in denen jeweils ein Dichtring angeordnet sein kann, wobei mindestens ein jeweils an jeder Seite der Ringnut in einer zugehörigen Dichtnut eingesetzter Dichtring bereits ausreichend sein kann. Dabei sind diese beidseitig von der Ringnut angeordnet. Dabei kann die Ringnut ebenfalls an dem ersten Getriebeteil angeordnet sein oder alternativ an dem zweiten Getriebeteil. Dabei weisen die beiden Dichtnuten einen axialen Abstand zueinander auf, wobei die Ringnut axial betrachtet zwischen den beiden Dichtnuten angeordnet ist. In der Dichtnut ist dabei ein Dichtring angeordnet, der die oben betrachtete Leckage dadurch verhindert, dass der Dichtring den Volumenstrom des Versorgungsmittels im Bereich des Übergangs zwischen dem ersten Getriebeteil und dem zweiten Getriebeteil zweiflächig abdichtet.

Das vorgeschlagene Planetengetriebe ermöglicht eine Schmier-/ Kühlmittelübertragung von drehende auf drehende Systeme sowie von feststehende auf drehende Systeme. Dabei weisen das erste und das zweite Getriebeteil unterschiedliche Rotationsgeschwindigkeiten auf. Bei einer Übertragung von einem drehenden auf ein anderes drehendes System sind im regulären Betriebszustand des Planetengetriebes die Rotationsgeschwindigkeiten des ersten Getriebeteils und des zweiten Getriebeteils von Null verschieden und weisen in die selbe oder in entgegengesetzte Umfangsrichtungen. Bei einer Übertragung zwischen einem feststehenden und einem drehenden System ist die Rotationsgeschwindigkeit eines der Getriebeteile Null, während das andere Getriebeteile im regulären Betriebszustand des Planetengetriebes eine von Null verschiedene Rotationsgeschwindigkeit aufweist. Ein besonderer Vorteil liegt darin, dass bei kleinen Leckagevolumenströmen eine axiale, sowie radiale Beweglichkeit zwischen den Getriebeteilen ausgeglichen werden kann.

Die Grenzfläche zwischen dem ersten Getriebeteil und dem zweiten Getriebeteil kann dabei im Bereich der Übertragungsvorrichtung parallel zu der Drehachse ausgeführt sein. Dann erfolgt die Übertragung des Versorgungsmittels radial. Ebenso ist es möglich, dass die Grenzfläche einen beliebigen Winkel zur Drehachse annimmt. Darüber hinaus ist es ebenfalls möglich, dass die Kontur zwischen den beiden Dichtnuten einen Sprung bzw. eine Stufe aufweist, so dass die Übertragung des Versorgungsmittel nicht nur eine radiale Komponente, sondern auch eine axiale Komponente aufweist. Mit einer Stufe ist auch eine rein axiale Übertragung des Versorgungsmittels möglich.

Im Vergleich zu bisherigen Lösungen, die eine Verwendung eines doppelte Pitchrohrsystem vorsahen, ist die hier vorgeschlagene Lösung auch bei unterschiedlichen Ausgestaltungen des Sonneninnendurchmessers möglich. Darüber hinaus eignet sich das vorgeschlagene Planetengetriebe auch für die Anwendung in einem Hybrid Drive, bei dem der Generator oder allgemein, eine elektrische Maschine, direkt an dem Planetengetriebe angeordnet ist.

Durch das vorgeschlagene Planetengetriebe besteht nun die Möglichkeit, das Schmier-/ Kühlmittel von der letzten Planetenstufe, beispielsweise einer dritten Planetenstufe, zu vorgeschalteten Planetenstufen, beispielsweise einer zweiten Planetenstufe, und zur davor geschalteten Planetenstufen, beispielsweise einer ersten Planetenstufe, zu transportieren. Diese Möglichkeit ermöglicht zudem eine leckagearme Schmier-/ Kühlmittelübertragung bei hohen radialen und axialen Relativbewegungen der einzelnen Getriebeteile. Die genannten Relativbewegungen können durch nachfolgende Maßnahmen verursacht werden, die dafür sorgen, dass sich die Sonne ihre Position innerhalb der Planetenstufe suchen kann:
- Kardanische Kupplung
- Freistellung/ Weglassen des Planetenträgerlagers
- Elastizitäten im System
- Elastizitäten der Sonne basierend auf ihrem Design.

Die Schmier-/ Kühlmittelübertragung zwischen den rotierenden Getriebeteilen dient nicht nur als Alternativlösung zum doppelwandigen Pitchrohr und zur Schmier-/ Kühlmittelübertragung mittels Labyrinthabdichtung, sondern weist darüber hinaus eine besonders hohe Dichtigkeit wegen der geringen Dichtspaltdurchmesser an den Dichtelementen auf. Dabei werden hohe axiale und radiale Relativbewegungen ermöglicht, die durch die kardanische Kupplung, der Freistellung oder Weglassung des Planetenträgerlagers, der Elastizitäten im System und der Elastizität der Sonne basierend auf ihrem Design entstehen können. Damit kann das vorgeschlagene Planetengetriebe auch besonders vorteilhaft und leckagearm bei diesen Betriebsbedingungen eingesetzt werden. Darüber hinaus ist eine Tauschbarkeit auf dem Turm ohne die Notwendigkeit der Demontage einzelner Getriebestufen gegeben. Das vorgeschlagene Übertragungssystem ist besonders einfach und besitzt eine geringe Komplexität durch das einfache Design und einer geringen Anzahl von Bauteilen. Dies ermöglicht einen zuverlässigen Betrieb. Das Systemdesign ist im besonderen Maße platzsparend und damit auch insbesondere für hochleistungsdichte Getriebe geeignet. Im besonderen Maße ist die Ausgestaltung des Getriebes mit mehr als zwei Stufen vorteilhaft, da im Gegensatz zum doppelwandigem Pitchrohrsystem, die Sonne der letzten Planetenstufe sehr nah an den Pitchrohraußendurchmesser geführt werden kann, wodurch die Planetenstufen mit einer größeren Übersetzung ausgeführt werden können.

Mit dem vorgeschlagenen Planetengetriebe lässt sich auf einfache Weise ein leistungsfähiger Antriebsstrang realisieren. Dabei weist das Planetengetriebe eine hohe Leistungsdichte auf. Mit anderen Worten ist das vorgeschlagene Planetengetriebe bei vorgegebener Leistung besonders klein und wird den Anforderungen an geringem Bauraum bei hoher Leistungsdichte gerecht. Daher kann es auch in einem Hybrid Drive direkt mit einer elektrischen Maschine, insbesondere einem Generator gekoppelt werden. Dabei bilden Getriebe und elektrische Maschine als Antriebsstrang eine bauliche Einheit.

Diese bauliche Einheit bzw. dieser Antriebsstrang kann aufgrund seiner kompakten Bauweise und seines geringen Gewichts besonders vorteilhaft in einer Windkraftanlage zum Einsatz kommen. Durch die Anordnung in der Gondel bringt ein geringes Gewicht viele Vorteile bei der Konstruktion von Turm und Gondel der Windkraftanlage.

Die Buchse kann insoweit schwimmend ausgeführt sein, dass die Buchse sich in axialer Richtung und/oder in radialer Richtung relativ zu dem ersten Getriebeteil und/oder zu dem zweiten Getriebeteil bewegen kann. Die relative Bewegbarkeit der schwimmenden Buchse ist hierbei im Wesentlichen durch die relative Beweglichkeit des jeweiligen Dichtrings in der zugehörigen Dichtnut bestimmt und/oder begrenzt. Der Dichtring kann an demjenigen Getriebeteil dichtend befestigt sein, das von demjenigen Getriebeteil verschieden ist, welches die zugehörige Dichtnut ausbildet, so dass der Dichtring in der Dichtnut eine Relativdrehung ausführt. Die Dichtnut weist eine größere axiale Erstreckung als der Dichtring auf, beispielsweise um mehr als 20%, mehr als 50% oder mehr als 100% der axialen Erstreckung des Dichtrings. Ein derartiges axiales Spiel des Dichtrings innerhalb der Dichtnut ermöglicht eine entsprechende axiale Beweglichkeit und/oder Freigängigkeit der schwimmenden Buchse. Zudem kann in radialer Richtung zwischen einem Grund der Dichtnut und dem eingesetzten Dichtring ein Abstand ausgebildet sein, der einen Schleifkontakt des Dichtrings an dem Grund der Dichtnut vermeidet. Der Abstand in radialer Richtung zwischen dem Dichtring und dem Grund der Dichtnut kann beispielsweise mehr als 5%, mehr als 20% oder mehr als 50% der Materialdicke des Dichtrings in radialer Richtung entsprechen. Durch das axiale Spiel des Dichtrings in der Dichtnut und dem radialen Abstand des Dichtrings zum Grund der Dichtnut, kann die schwimmende Buchse aus einer zu einer Drehachse koaxialen Lage verkippt werden. Die Buchse kann unter Last und/oder bei toleranzbedingten Fehlstellungen etwas aus der koaxialen Relativlage heraus kippen, ohne dass sich die Buchse an ihren Axialseiten zwischen axialen Anschlägen verklemmt. Vorzugsweise ist die Buchse zumindest teilweise aus einem duktileren Material als das übrige erste Getriebeteil und/oder das zweite Getriebeteil hergestellt, beispielsweise aus einem Kupfermaterial oder Kunststoff. Die Buchse kann dadurch um eine senkrecht zu einer Drehachse des ersten Getriebeteils und/der des zweiten Getriebeteils verlaufende Kippachse im Ausmaß der Relativbeweglichkeit der Dichtringe in der zugehörigen Dichtnut verkippt werden, wodurch mit einfachen konstruktiven Mitteln eine leckagearme Übertragung eines Versorgungsmittels zwischen zwei relativ zueinander drehbaren, aber nicht notwendigerweise immer exakt koaxial zueinander zentrierten, Getriebeteilen ermöglicht ist. Insbesondere ist es möglich geringere Toleranzanforderungen für die Herstellungsgenauigkeit und Lagegenauigkeit der Getriebeteile vorzusehen, wodurch die Herstellungskosten deutlich reduziert werden können.

Die über den Umfang verteilten Bohrungen können in dem jeweils der Ringnut gegenüberliegenden Getriebeteil vorgesehen sein. Die Buchse kann hierbei mindestens eine Öffnung, vorzugsweise mehrere Öffnungen, aufweisen, um das Versorgungsmittel zwischen dem übrigen ersten Getriebeteil und dem zweiten Getriebeteil austauschen zu können. Alternativ kann der von der Buchse verschiedene Teil des ersten Getriebebauteils eine zum zweiten Getriebebauteil und zur Buchse hin geöffnete Ringnut aufweisen, wobei das zweite Getriebebauteil ebenfalls eine zum ersten Getriebebauteil und/oder zur Buchse hin geöffnete Ringnut aufweist, wobei die über den Umfang verteilten Bohrungen in der Buchse ausgebildet sind. Die Buchse kann beispielsweise als perforierter Zylinder ausgestaltet sein, an dessen äußerer oder inneren Mantelfläche die Dichtnuten für die Dichtringe vorgesehen sind. Die Buchse ist dadurch besonders einfach ausgeformt und kann kostengünstig hergestellt werden. Zusätzlich oder alternativ kann die Buchse am radial äußeren Ende und/der am radial inneren Ende der Bohrungen eine die Bohrungen in Umfangsrichtung miteinanderverbindende Ringnut aufweisen. Dadurch kann eine Ringnut in dem übrigen ersten Getriebeteil beziehungsweise in dem zweiten Getriebeteil eingespart werden.

Durch die schwimmende Buchse kann die Abdichtung am Übergang zwischen dem ersten Getriebeteil und dem zweiten Getriebeteil besonders verschleißarm durchgeführt werden. Durch die schwimmende Buchse wird ein besonders schmaler und damit leckagearmer Übergang zwischen dem ersten Getriebeteil und dem zweiten Getriebeteil geschaffen. In diesem Bereich ist keine Abdichtung erforderlich. Die Abdichtung erfolgt zwischen der schwimmenden Buchse und dem übrigen Teil des ersten Getriebeteils. Dieser ist auch dazu ausgelegt, axiale Verschiebungen und Verkippungen auszugleichen. Aufgrund der dafür erforderlichen Maße und Abstände kommen in diesem Bereich die vorgeschlagenen Dichtnuten und Dichtringe zum Einsatz. Zwischen den Dichtringen und den Komponenten des ersten Getriebeteils ist keine rotatorische Relativbewegung vorhanden, der einen Verschleiß der Dichtringe bewirken könnte. Mit anderen Worten ist durch ruhende Anordnung der schwimmenden Buchse gegenüber den übrigen Teilen des ersten Getriebeteils ein besonders verschleißarmer Betrieb des Planetengetriebes möglich. Die schwimmende Buchse kann hierbei grundsätzlich drehfest mit dem übrigen ersten Getriebeteil gekoppelt sein. Bei der Koppelung der Buchse mit dem übrigen ersten Getriebeteil kann ein signifikantes Spiel in Umfangsrichtung und/oder nur ein einzelner Tangentialanschlag vorgesehen sein. Da die Drehrichtung des ersten Getriebeteils und des zweiten Getriebeteils normalerweise nicht wechselt, ist ein einzelnes tangentiales Anschlagen der Buchse an dem übrigen ersten Getriebeteil bereits ausreichend, um die schwimmende Buche drehfest ruhend an dem übrigen ersten Getriebeteil anzuordnen. Durch das Spiel in Umfangsrichtung zwischen der schwimmenden Buchse und dem übrigen ersten Getriebeteil können einem Verkippen der Buchse entgegenwirkende Reibungskräfte zwischen der schwimmenden Buchse und dem übrigen ersten Getriebeteil gering gehalten werden. Das bewusst zugelassene Verkippen der schwimmenden Buchse wird durch die verschleißarme Reduzierung der Relativbewegung zwischen den Dichtringen und dem ersten Getriebeteil auf annähernd Null kaum beeinträchtigt.

Insbesondere ist vorgesehen, dass ein feststehendes Getriebegehäuse des Planetengetriebes zumindest einen Teil des ersten Getriebeteil bildet, wobei eine relativ zu dem Getriebegehäuse drehende Getriebekomponente, insbesondere ein Planetenträger zumindest einen Teil des zweiten Getriebeteil ausbildet. An dem feststehenden Getriebegehäuse kann leicht eine Fördereinrichtung, beispielsweise Ölpumpe, angeschlossen werden, um das Versorgungsmittel, insbesondere Schmieröl, zuzuführen. Mit Hilfe der Übertragungsvorrichtung kann das Versorgungsmittel leicht und leckagearm zu einer drehenden Getriebekomponente geförderter werden, wo das Versorgungsmittel, insbesondere zumindest teilweise fliehkraftgetrieben über nach radial außen führende Öffnungen, an zu schmierende Stellen, beispielsweise Lager oder Verzahnungen, gelangen kann. Zudem ist es möglich, dass ein Teil des an die drehende Getriebekomponente geförderten Massenstroms über eine weitere Übertragungsvorrichtung an einer weitere relativ drehbare Getriebekomponente innerhalb der selben Getriebestufe und/oder einer benachbarten Getriebestufe gefördert werden kann.

In einer weiteren Ausführungsform ist vorgesehen, dass das erste Getriebeteil und das zweite Getriebeteil relativ drehbar zu einem feststehendes Getriebegehäuse des Planetengetriebes ausgeführt sind. Die Übertragungsvorrichtung kann dadurch auch zur Übertragung des Versorgungsmittels zwischen zwei sich drehenden Getriebeteilen vorgesehen sein.

Bei einer vorteilhaften Ausgestaltung der Erfindung ist das erste Getriebeteil zumindest im Bereich der Übertragungsvorrichtung gegenüber des zweiten Getriebeteils außen angeordnet, wobei die schwimmende Buchse einen Teil des zweiten Getriebeteils umschließt, wobei die Dichtnuten an der Innenseite der schwimmenden Buchse angeordnet sind. Die Dichtringe sitzen auf dem zweiten Getriebeteil und rotieren mit der Geschwindigkeit des zweiten Getriebeteils. Die Dichtringe sind also innen anliegend ausgebildet. Für die Dichtringe bietet sich als Material ein Kunststoff an. Durch den Druck des Versorgungsmittels, beispielsweise des Öls, am Übergang zwischen der Ringnut und den Bohrungen drückt das Versorgungsmittel die Dichtringe jeweils an den Rand der Dichtnut und dichtet diese damit ab.

Um die Dichtringe auf dem zweiten Getriebeteil montieren zu können, ist es vorteilhaft, wenn die Ringnut im ersten Getriebeteil angeordnet ist und die über den Umfang verteilten Bohrungen im zweiten Getriebeteil angeordnet sind.

Besonders vorteilhaft ist die Anwendung dieser Ausgestaltungsform bei einem mehrstufigen Getriebe. Hierbei kann im Strömungspfad des Versorgungsmittels zwischen weiteren relativ zueinander drehbaren Getriebeteilen der im Strömungspfad nachfolgenden Getriebestufen wiederum eine Übertragungsvorrichtung vorgesehen sein, wie sie vorstehend beschrieben aus- und weitergebildet sein kann. Zwischen dem Innendurchmesser der vorhergehenden Stufe und dem der nachfolgenden Stufe des mehrstufigen Planetengetriebes können Dichtringe aus Kunststoff eingesetzt sein. Die Dichtringe werden auch als Bufferringe bezeichnet. Dafür ist eine zentrierte Buchse insbesondere an der langen Nabe des nachgehenden Planetenträgers einzusetzen, die die Lauffläche der Bufferringe bildet. Alternativ kann die Kontur auch über eine Verlängerung der langen Nabe des Planetenträgers realisiert werden. In dem vorhergehenden Planetenträger werden die Bufferringe in die vorhergesehenen Dichtnuten eingesetzt. Die Kontur der Nuten kann auch über eine zusätzliche Buchse abgebildet werden.

Zwischen der Buchse und der Laufbahn der Bufferringe kann ein Spalt gewählt sein, der die radiale Verlagerung sowie die Verkippung des Gesamtsystems in der Verbindung ausgleichen kann. Das System ist in vorteilhafter Weise so ausgebildet, dass auch axiale Verlagerungen kompensiert werden können.

Zudem kann die Tiefe der Dichtnut des Bufferrings entsprechend des Spaltes gewählt werden, um ein Anlaufen im Nutgrund zu verhindern.

Die Dichtringe der jeweiligen Übertragungsvorrichtung können als Kolbenringe, beispielsweise in Anlehnung an die DIN 34 118, DIN 34 110 oder ähnliche Normen zu Kolbenringen, in die vorhergesehenen Dichtnuten der schwimmenden Buchse eingesetzt sein. Zwischen der zylindrischen Anlagefläche der Kolbenringe, dies entspricht der Bohrung im ersten Teil außerhalb der schwimmenden Buchse und der schwimmenden Buchse ist ein Spalt zu wählen, der die radiale Verlagerung sowie die Verkippung des Gesamtsystems an der Übergabestelle ausgleichen kann.

Die schwimmende Buchse kann durch eine Haltevorrichtung gegen Verdrehen gesichert sein, wodurch die Kolbenringe keine relative Rotationsbewegung erfahren. Axial hat die schwimmende Buchse ausreichend Spiel, sodass die Verkippung des Systems zugelassen werden kann. Die relativen Rotationsbewegungen zwischen den Systemen finden an der Bohrung der schwimmenden Buchse und einer innenliegenden ringförmige Struktur statt. Diese Kontaktstelle ist in Anlehnung eines Gleitlagers ausgeführt und wird durch die innere ringförmige Struktur aufgrund Funktion der Schmier-/ Kühlmittelübertragung mit ausreichend Öl versorgt. Besonders vorteilhaft in dieser Ausgestaltung ist, dass die Dichtringe, ausgebildet beispielsweise als Kolbenringe und die Dichtnut gegeneinander ruhen. Somit entstehen nur geringfügig Reibung und Abnutzung an den Seiten der Kolbenringe. Damit ist diese Anordnung im besonderen verschleißarm.

Darüber hinaus hat diese Ausgestaltung den Vorteil, dass sie eine flexible Positionswahl der Übertragungsvorrichtung innerhalb des Planetengetriebes bietet. Darüber hinaus erfolgt eine Trennung der verschleißerzeugenden Bewegungen im Planetengetriebe, wodurch die Abnutzung der Kolbenringe deutlich reduziert wird.

Bei einer weiteren vorteilhaften Ausgestaltung der Erfindung ist das erste Getriebeteil zumindest im Bereich der Übertragungsvorrichtung gegenüber des zweiten Getriebeteils innen angeordnet, wobei die schwimmende Buchse von einem Teil des zweiten Getriebeteils umschlossen wird, wobei die Dichtnuten an der Innenseite der schwimmenden Buchse angeordnet sind. Die Dichtringe sind an der Innenseite des zweiten Getriebeteils angeordnet und rotieren mit der Geschwindigkeit des zweiten Getriebeteils. Die Dichtringe sind also innen anliegend ausgebildet. Dafür bieten sich als Dichtringe Kolbenringe an. Alternativ sind auch außen anliegende Dichtringe aus Kunststoff und alternative Materialien anwendbar. Durch den Druck des Versorgungsmittels, beispielsweise des Öls, am Übergang zwischen der Ringnut und den Bohrungen drückt das Versorgungsmittel die Dichtringe jeweils an den Rand der Dichtnut und dichtet diese damit ab.

Um die Dichtringe auf dem zweiten Getriebeteil montieren zu können, ist es vorteilhaft, wenn die Ringnut im ersten Getriebeteil angeordnet ist und die über den Umfang verteilten Bohrungen im zweiten Getriebeteil angeordnet sind.

Besonders vorteilhaft ist die Anwendung dieser Ausgestaltungsform bei einem mehrstufigen Getriebe. Zwischen dem Innendurchmesser der vorhergehenden Stufe des mehrstufigen Getriebes und dem der nachfolgenden Stufe werden Kolbenringe, beispielsweise in Anlehnung an die DIN 34 118, DIN 34110 oder ähnliche Normen zu Kolbenringen, eingesetzt. Dafür ist eine zentrierte Buchse an der langen Nabe des nachfolgenden Planetenträgers einzusetzen, in der die Kolbenringe in die vorhergesehenen Dichtnuten eingesetzt werden. Alternativ kann die Kontur auch über eine Verlängerung der langen Nabe des Planetenträgers realisiert werden. Der vorhergehende Planetenträger bildet die Laufbahn der Kolbenringe, die einerseits in dem Planetenträger oder über eine Buchse vorgesehen werden können.

Zwischen der Buchse und der Laufbahn der Kolbenringe kann ein Spalt gewählt sein, der die radiale Verlagerung sowie die Verkippung des Gesamtsystems in der Verbindung ausgleichen kann. Das System ist in vorteilhafter Weise so ausgebildet, dass auch axiale Verlagerungen kompensiert werden können. Zudem kann die Tiefe der Dichtnut des Kolbenrings entsprechend des Spaltes gewählt werden, um ein Anlaufen des Kolbenrings im Nutgrund zu verhindern.

Kolbenringe sind beispielsweise in Anlehnung an die DIN 34 118, DIN 34 110 oder ähnliche Normen zu Kolbenringen in Durchmesserbereichen von 10-1200mm verfügbar. Daher ist die vorgeschlagene Übertragungsvorrichtung in einem Planetengetriebe in verschieden Größen und damit in verschiedenen Leistungsklassen umsetzbar.

Durch die schwimmende Buchse ist auch hier der Abstand zwischen dem ersten Getriebeteil und dem zweiten Getriebeteil derart gering, dass auch ohne Dichtnut und Dichtring an diesem Übergang die Leckage hinreichend gering ist. Die schwimmende Buchse ist dabei in der Lage, Verlagerungen auszugleichen, die ansonsten zu einem großen Abstand zwischen dem ersten Getriebeteil und dem zweiten Getriebeteil führen können. Diese würden ohne Abdichtungsmaßnahmen eine unzulässige hohe Leckage bewirken. Die schwimmende Buchse gleicht diese Verlagerungen dann aus. Die Abdichtung mit Hilfe der Dichtnut und dem Dichtring erfolgt dann im Innern des ersten Getriebeteils. Der Dichtring ist in diesem Ausführungsbeispiel innenanliegend und ist in der Dichtnut der schwimmenden Buchse angeordnet. Aufgrund der innenanliegenden Dichtringe können die Dichtringe in vorteilhafter Weise durch Verwendung eines Kunststoffs oder alternativem Material realisiert werden.

Die schwimmende Buchse kann beispielsweise darüber hinaus eine weitere Ringnut für die Übertragung des Versorgungsmittels zwischen schwimmender Buchse und dem übrigen Teil des ersten Getriebeteils aufweisen. Auch hier sind im übrigen Teil des ersten Getriebeteils fluchtend weitere Bohrungen über den Umfang verteilt, um den Fluss des Versorgungsmittels leckagearm sicherzustellen. Da die weitere Ringnut an der Innenseite der schwimmenden Buchse angeordnet ist, wird die Ringnut an dem zweiten Getriebeteil angeordnet und die über den Umfang verteilten Bohrungen am zweiten Getriebeteil.

Die Ringnut kann daher ebenfalls in vorteilhafter Weise an der Innenseite der schwimmenden Buchse zwischen den Dichtnuten angeordnet sein.

Die schwimmende Buchse kann durch eine Haltevorrichtung gegen Verdrehen gesichert sein, wodurch die Dichtringe keine relative Rotationsbewegung erfahren. Axial hat die schwimmende Buchse ausreichend Spiel, so dass die Verkippung des Systems zugelassen werden kann. Die relativen Rotationsbewegungen zwischen den Systemen finden an der Bohrung der schwimmenden Buchse und einer außen anliegenden Welle statt. Diese Kontaktstelle ist in Anlehnung eines Gleitlagers ausgeführt und wird durch die äußere Welle aufgrund Funktion der Schmier-/ Kühlmittelübertragung mit ausreichend Öl versorgt.

Besonders vorteilhaft in dieser Ausgestaltung ist, dass die Dichtringe und die Dichtnut gegeneinander ruhen. Somit entsteht nur geringfügig Reibung und Abnutzung an den Seiten der Dichtringe. Damit ist diese Anordnung im besonderen verschleißarm.

Bei einer weiteren vorteilhaften Ausgestaltung der Erfindung weist das Planetengetriebe eine erste Getriebestufe und eine zweite Getriebestufe auf, wobei der Planetenträger der ersten Getriebestufe zumindest einen Teil des ersten Getriebeteil bildet, wobei der Planetenträger der zweiten Getriebestufe zumindest einen Teil des zweiten Getriebeteil bildet. Bei mehrstufigen Getrieben, insbesondere mehrstufigen Planetengetrieben kann es zu radialen Verlagerungen und Verkippungen der einzelnen Getriebestufen können. Diese müssen bei der Ausgestaltung der Versorgungsmittelverteilung im Innern des Getriebes berücksichtigt werden. Das vorgeschlagene Planetengetriebe kann besonders große Abweichungen zwischen den Getriebestufen ausgleichen, ohne dass Leckagen im Versorgungsmittelkreislauf entstehen. Daher eignet sich das vorgeschlagene Planetengetriebe im Besonderen für die Ausgestaltung als mehrstufiges Getriebe. Wobei es sich ganz besonders für die Ausgestaltung mit mehr als zwei Stufen eignet.

Bei einer weiteren vorteilhaften Ausgestaltung der Erfindung werden das erste Getriebeteil und das zweite Getriebeteil jeweils zumindest teilweise durch ein Gussteil gebildet. Gussteile sind nur mit relativ großen Fertigungstoleranzen herstellbar, sind jedoch sehr stabil und können hohe Kräfte und Drehmomenten übertragen. Durch das vorgeschlagene Planetengetriebe können selbst größere Verlagerungen und Verkippungen ausgeglichen werden, so dass durch die Ausgestaltung der Getriebeteile als Gussteile ein besonders leistungsfähiges Planetengetriebe herstellbar ist. Darüber hinaus kann die Versorgung mit Schmier- und Kühlmitteln zuverlässig sichergestellt werden. Dies wirkt sich ebenfalls positiv auf die übertragbare Leistung des Planetengetriebes aus. Somit lässt sich durch die Ausgestaltung der Getriebeteile als Gussteile ein besonders leistungsfähiges Planetengetriebe mit der vorgeschlagenen Übertragungsvorrichtung mit geringen Abmessungen und geringem Gewicht herstellen.

Im Folgenden wird die Erfindung anhand der in den Figuren dargestellten Ausführungsbeispiele näher beschreiben und erläutert. Es zeigen:
- FIG 1 und FIG 2: Ausgestaltungen für eine Übertragungsvorrichtung für Versorgungsmittel eines Planetengetriebes,
- FIG 3: einen Antriebsstrang und
- FIG 4: eine Windkraftanlage.

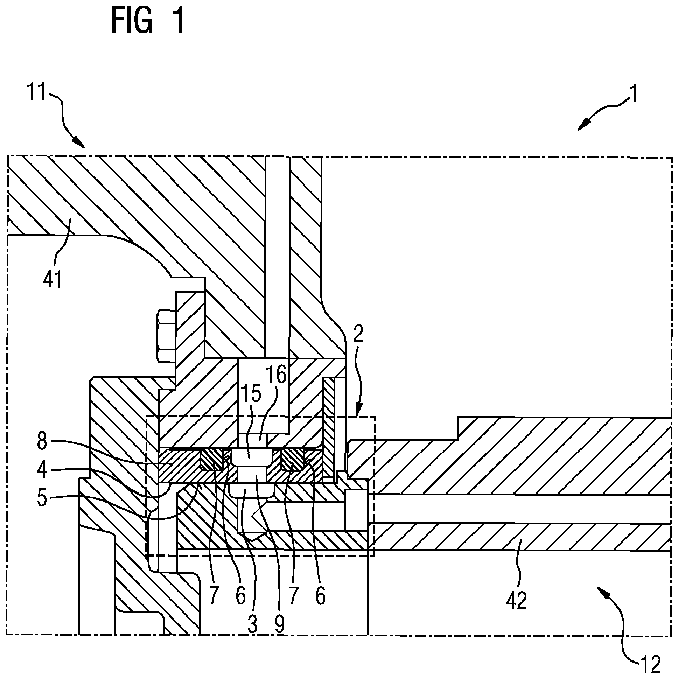

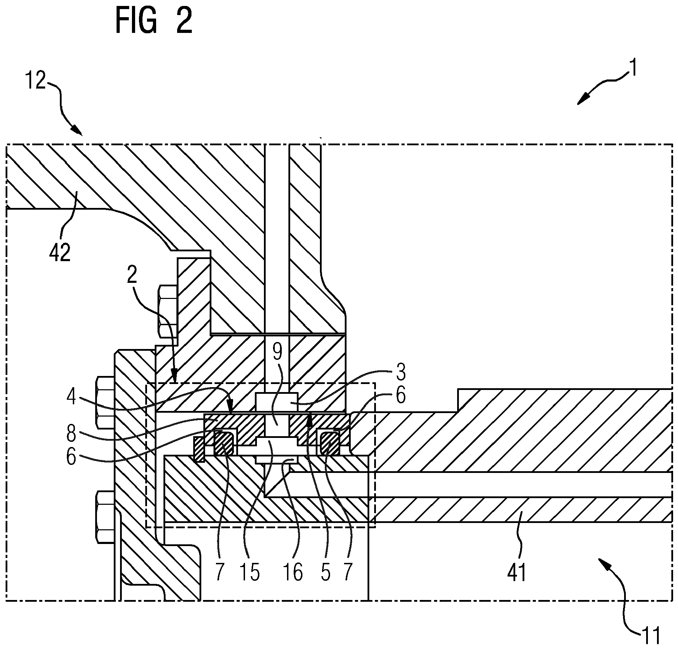

Die Figuren 1 und 2 zeigen verschiedene Ausgestaltungen einer Übertragungsvorrichtung 2 in einem Planetengetriebe 1.

Die FIG 1 zeigt dabei einen Ausschnitt des Planetengetriebes 1, in dem die Übertragungsvorrichtung 2 angeordnet ist. In einem Planetengetriebe 1 können mehrere Übertragungsvorrichtungen 2 angeordnet sein. Die Übertragungsvorrichtung 2 dient zum Übertragen eines Versorgungsmittels zwischen einem ersten Getriebeteil 11 und einem zweiten Getriebeteil 12. Diese beiden Getriebeteile 11, 12 sind im Planetengetriebe 1 angeordnet und weisen im Betrieb eine relative Rotationsgeschwindigkeit zueinander auf. Dabei weist das erste Getriebeteil 11, das in diesem Ausführungsbeispiel das äußere Teil darstellt, eine schwimmende Buchse 8 auf. Als Teil des ersten Getriebeteils 11 rotiert die schwimmende Buchse mit der Geschwindigkeit des ersten Getriebeteils. An der Außenseite der schwimmenden Buchse sind Dichtnuten 6 angeordnet. Zwischen den Dichtnuten 6 sind radial versetzt, über den Umfang verteilt Bohrungen 9 angeordnet an der Innenseite der schwimmenden Buchse 8 angeordnet. Die Innenseite der schwimmenden Buchse 8 bildet dabei eine Oberfläche 4 des ersten Getriebeteils 11. Auf der gegenüberliegenden Seite der Oberfläche 4 des ersten Getriebeteils befindet sich eine Oberfläche 5 des zweiten Getriebeteils 12, das gegenüber dem ersten Getriebeteil 11 innenliegend angeordnet ist. Vorzugsweise fluchtend zu den über den Umfang verteilten Bohrungen 9 ist im zweiten Getriebeteil 12 an der Oberfläche 5 des zweiten Getriebeteils 12 eine Ringnut 3 angeordnet. Somit ist die Dichtnut 6 beidseitig, radial versetzt und axial beabstandet zu der Ringnut 3 angeordnet.

Alternativ ist es auch möglich, die Ringnut 3 im ersten Getriebeteil 11 und die über den Umfang verteilten Bohrungen 9 im zweiten Getriebeteil 12 anzuordnen.

Zwischen der Ringnut 3 und den Bohrungen 9 kann das Versorgungsmittel zwischen dem ersten Getriebeteil 11 und dem zweiten Getriebeteil 12 ausgetauscht werden. An der Grenzfläche zwischen dem ersten Getriebeteil 11 und dem zweiten Getriebeteil 12, also an der Oberfläche 4 des ersten Getriebeteils 11 und der Oberfläche 5 des zweiten Getriebeteils 12 ist hier aufgrund der schwimmenden Buchse 8 nur ein kleiner Abstand vorhanden, der eine Leckage des Versorgungsmittels wie Öl zuverlässig verhindert oder zumindest auf zulässige Werte begrenzt.

Aus verschiedenen Gründen wie beispielsweise einer radialen Verlagerung oder Verkippungen entsteht innerhalb des ersten Getriebeteils 11 ein Abstand zwischen der schwimmenden Buchse 8 und den übrigen Teilen des ersten Getriebeteils 11. Dazu dient die im ersten Getriebeteil 11 angeordnete Dichtnut 6. In der Dichtnut 6 ist jeweils ein Dichtring 7 angeordnet der an der schwimmenden Buchse 8 anliegt.

Mit anderen Worten wird das Problem des großen Abstands aufgrund von radialen Verlagerungen sowie der Verkippungen auf einen Bereich innerhalb des ersten Getriebeteils 11 verlagert. Dort erfolgt dann auch die Abdichtung, da an der Stelle größere Abstände vorhanden sind, die ohne Maßnahmen zur Abdichtung eine unzulässig hohe Leckage verursachen.

An der Oberfläche 5 des zweiten Getriebeteils 12 ist die Ringnut 3 vorhanden, von der das Versorgungsmittel zu den über den Umfang verteilten Bohrungen 9 übertragen werden kann. Die Übertragung des Versorgungsmittels kann dabei in beide Richtungen erfolgen. Die Bohrungen 9 sind dabei an der Innenseite in der schwimmenden Buchse 8 angeordnet und enden vorzugsweise in einer weiteren Ringnut 15 an der Außenseite der schwimmenden Buchse 8, wobei die weitere Ringnut 15 auch entfallen kann. Vorzugsweise fluchtend zu der weiteren Ringnut 15 sind an dem der schwimmenden Buchse 8 gegenüberliegenden Teil des ersten Getriebeteils 11 über den Umfang verteilt weitere Bohrungen 16 angeordnet, die einen Austausch des Versorgungsmittels innerhalb des ersten Getriebeteils 11 auch bei erhöhtem Abstand ermöglichen.

Alternativ ist es auch möglich, die weiteren über den Umfang verteilten Bohrungen 16 in der schwimmenden Buchse 8 und die die weitere Ringnut 15 im übrigen Teil des ersten Getriebeteils 11 anzuordnen.

Beidseitig von der weiteren Ringnut 15, und damit axial beabstandet auch von der Ringnut 3, sind die Dichtnuten 6 an der Außenseite der schwimmenden Buchse 8 angeordnet. An der gegenüber der Außenseite der schwimmenden Buchse 8 gegenüberliegenden Oberfläche des ersten Getriebeteils 11 liegt der Dichtring 7 an, der in der Dichtnut 6 angeordnet ist. Dieser wird wieder wegen des Drucks des Versorgungsmittels am Übergang zwischen der weiteren Ringnut 15 und den weiteren Bohrungen 16 an den Rand der Dichtnut 6 gedrückt und dichtet diese ab. Der Dichtring 7 kann, da er außen anliegend an dem ersten Getriebeteil 11 angeordnet ist, als Kolbenring ausgebildet sein.

Der Dichtring 7 erfährt aufgrund der geringen Relativbewegungen allenfalls eine geringe Reibung durch die Berührung des Randes der Dichtnut 6, da das erste Getriebeteil 11 und die schwimmende Buchse 8, die ein Teil des ersten Getriebeteils 11 darstellt, keine Relativbewegung zueinander aufweisen. Somit ist diese Anordnung besonders verschleißarm. Durch den geringen Verschleiß eignet sich diese Ausgestaltung insbesondere für Planetengetriebe 1, die in einer Windkraftanlage 30 angeordnet sind. Wartungsarbeiten sind dort oftmals kostspielig, da der Zugang zu der Windkraftanlage 30 oftmals schwierig und damit aufwendig ist.

Bei der Ausbildung des Planetengetriebes 1 als mehrstufiges Getriebe kann ein erster Planetenträger 41 der ersten Getriebestufe den ersten Getriebeteil 11 oder einen Teil des ersten Getriebeteils 11 bilden. Ebenso kann ein zweiter Planetenträger 42 der zweiten Getriebestufe den zweiten Getriebeteil 12 oder einen Teil des zweiten Getriebeteils 12 bilden.

Die FIG 2 zeigt ein weiteres Ausführungsbeispiel eines Planetengetriebes 1. Dabei ist im Gegensatz zum Ausführungsbeispiel der FIG 1 das erste Getriebeteil 11 innen gegenüber dem zweiten Getriebeteil 12 angeordnet. Zur Vermeidung von Wiederholungen wird auf die Beschreibung zur FIG 1 sowie auf die dort eingeführten Bezugszeichen verwiesen. Da die Dichtnuten 6 sich nun in dem inneren Getriebeteil befinden, ist der Dichtring 7 nun innen anliegend. Durch den innen anliegenden Dichtring 7 kann als Material für den Dichtring 7 beispielsweise ein Kunststoff verwendet werden. Das Übertragen des Versorgungsmittel mittels Ringnut 3 und Bohrungen 9 sowie die Abdichtung durch den Dichtring 7 in der Dichtnut 6 erfolgt analog zu den Beschreibungen der FIG 1.

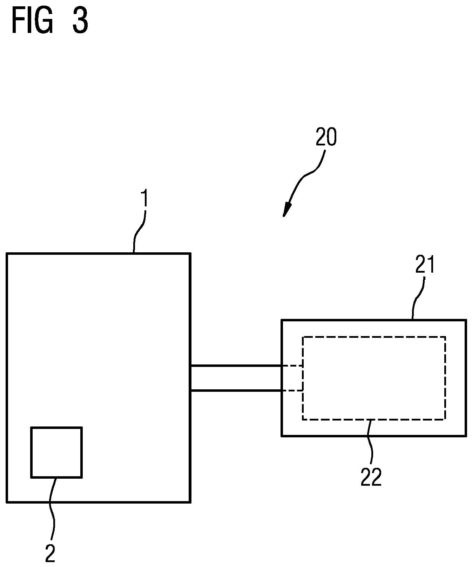

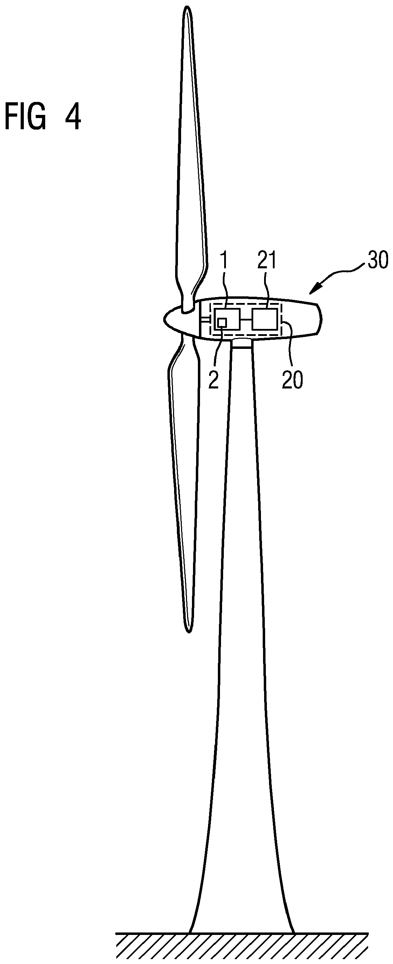

Die FIG 3 zeigt einen Antriebsstrang 20. Bei dem Antriebsstrang 20 ist das Planetengetriebe 1 mit einer elektrischen Maschine 21 gekoppelt, bzw. verbunden. Dabei ist ein Rotor 22 mit einer Welle des Planetengetriebes 1 verbunden. Das Planetengetriebe 1 weist dabei eine Übertragungsvorrichtung 2 auf. Optional können die elektrische Maschine 21 und das Planetengetriebe 1 eine bauliche Einheit, ein sogenanntes Hybrid Drive, bilden. Aufgrund der Vorteile des Planetengetriebes 1 kann ein besonders kompakter Antriebsstrang 20 realisiert werden. Dieser hat in Bezug auf seine Leistungsfähigkeit geringe Abmessungen und ein geringes Gewicht. Damit eignet sich dieser Antriebsstrang 20 oder auch nur das Planetengetriebe 1 für die Anwendung in einer Windkraftanlage 30, wie in FIG 4 gezeigt. Dabei stellt die elektrische Maschine 21 einen Windkraftgenerator, also einen Generator für eine Windkraftanwendung, dar. Durch das geringe Gewicht und den geringeren Abmessungen ist eine Anordnung des Planetengetriebes 1 oder des Antriebsstrangs 20 in einer Gondel der Windkraftanlage 30 vorteilhaft, da dies sich positiv auf die Konstruktion der Gondel und eines Turms der Windkraftanlage 30 auswirkt.

Zusammenfassend betrifft die Erfindung ein Planetengetriebe mit einer Übertragungsvorrichtung zum Übertragen eines Versorgungsmittels zwischen einem ersten Getriebeteil des Planetengetriebes und einem zweiten Getriebeteil des Planetengetriebes, wobei das erste Getriebeteil und das zweite Getriebeteil im Betrieb des Planetengetriebes eine Relativbewegung zueinander aufweisen, wobei die Übertragungsvorrichtung eine Ringnut an der Oberfläche des ersten Getriebeteils oder an der Oberfläche des zweiten Getriebeteils aufweist, wobei die Übertragungsvorrichtung über den Umfang verteilte Bohrungen in dem jeweils der Ringnut gegenüberliegenden Getriebeteil aufweist, wobei die über den Umfang verteilten Bohrungen gegenüber der Ringnut angeordnet sind, wobei das erste Getriebeteil eine schwimmende Buchse aufweist, wobei die Dichtnuten an der schwimmenden Buchse angeordnet sind, wobei die schwimmende Buchse derart an dem ersten Getriebeteil angeordnet ist, dass die schwimmende Buchse gegenüber dem ersten Getriebeteil ruht, wobei beidseitig von der Ringnut jeweils mindestens eine Dichtnut an der schwimmenden Buchse angeordnet ist, wobei in den Dichtnuten jeweils mindestens ein Dichtring angeordnet ist. Die Erfindung betrifft weiter einen Antriebsstrang, aufweisend eine elektrische Maschine und ein derartiges Planetengetriebe, wobei ein Rotor der elektrischen Maschine kraftschlüssig und/ oder formschlüssig mit einer Welle des Planetengetriebes verbunden ist. Ferner betrifft die Erfindung eine Windkraftanlage mit einem derartigen Planetengetriebe oder einem derartigen Antriebsstrang.

## Patentansprüche

1. Planetengetriebe (1) mit einer Übertragungsvorrichtung (2) zum Übertragen eines Versorgungsmittels zwischen einem ersten Getriebeteil (11) des Planetengetriebes (1) und einem zweiten Getriebeteil (12) des Planetengetriebes (1), wobei das erste Getriebeteil (11) und das zweite Getriebeteil (12) im Betrieb des Planetengetriebes (1) eine rotatorische Relativbewegung zueinander aufweisen und jeweils zumindest teilweise einen Teil der Übertragungsvorrichtung (2) ausbilden, wobei die Übertragungsvorrichtung (2) eine Ringnut (3) an der Oberfläche (4) des ersten Getriebeteils (11) oder an der Oberfläche (5) des zweiten Getriebeteils (12) aufweist, wobei die Übertragungsvorrichtung (2) über den Umfang verteilte Bohrungen (9) aufweist, wobei die über den Umfang verteilten Bohrungen (9) gegenüber der Ringnut (3) angeordnet sind, wobei das erste Getriebeteil (11) eine zum zweiten Getriebeteil weisende separate Buchse (8) zum Übertragen des Versorgungsmittels aufweist, wobei axial beidseitig von der Ringnut (3) jeweils eine Dichtnut (6) in der Buchse (8) ausgebildet ist, wobei in den Dichtnuten (6) jeweils ein Dichtring (7) angeordnet ist, wobei die Buchse (8) drehfest ruhend an dem übrigen ersten Getriebeteil (11) angeordnet ist,
**dadurch gekennzeichnet, dass**
die Buchse (8) in axialer Richtung schwimmend mit ausreichend Spiel zum Verkippen aus einer zum ersten Getriebeteil (11) und/oder zum zweiten Getriebeteil (12) koaxialen Relativlage im Ausmaß einer Relativbeweglichkeit des jeweiligen Dichtrings (7) innerhalb der zugehörigen Dichtnut (6) ausgebildet ist.

2. Planetengetriebe (1) nach Anspruch 1, wobei das erste Getriebeteil (11) zumindest im Bereich der Übertragungsvorrichtung (2) gegenüber des zweiten Getriebeteils (12) außen angeordnet ist, wobei die Buchse (8) einen Teil des zweiten Getriebeteils (12) umschließt, wobei die Dichtnuten (6) an der Außenseite der Buchse (8) angeordnet sind.

3. Planetengetriebe (1) nach Anspruch 1, wobei das erste Getriebeteil (11) zumindest im Bereich der Übertragungsvorrichtung (2) gegenüber des zweiten Getriebeteils (12) innen angeordnet ist, wobei die Buchse (8) von einem Teil des zweiten Getriebeteils (12) umschlossen wird, wobei die Dichtnuten (6) an der Innenseite der Buchse (8) angeordnet sind.

4. Planetengetriebe (1) nach einem der Ansprüche 1 bis 3, wobei das Planetengetriebe (1) eine erste Getriebestufe und eine zweite Getriebestufe aufweist, wobei der Planetenträger der ersten Getriebestufe zumindest einen Teil des ersten Getriebeteil (11) bildet, wobei der Planetenträger der zweiten Getriebestufe zumindest einen Teil des zweiten Getriebeteil (12) bildet.

5. Planetengetriebe (1) nach einem der Ansprüche 1 bis 4, wobei ein feststehendes Getriebegehäuse des Planetengetriebes (1) zumindest einen Teil des ersten Getriebeteil (11) bildet, wobei eine relativ zu dem Getriebegehäuse drehende Getriebekomponente, insbesondere ein Planetenträger zumindest einen Teil des zweiten Getriebeteil (12) ausbildet.

6. Planetengetriebe (1) nach einem der Ansprüche 1 bis 4, wobei das erste Getriebeteil (11) und das zweite Getriebeteil (12) relativ drehbar zu einem feststehendes Getriebegehäuse des Planetengetriebes (1) ausgeführt sind.

7. Planetengetriebe (1) nach einem der Ansprüche 1 bis 6, wobei das erste Getriebeteil (11) und das zweite Getriebeteil (12) jeweils zumindest teilweise durch ein Gussteil gebildet werden.

8. Planetengetriebe (1) nach einem der Ansprüche 1 bis 7, wobei die Buchse (8) duktiler als das übrige erste Getriebeteil (11) und/oder als das zweite Getriebeteil (12) ausgestaltet ist.

9. Planetengetriebe (1) nach einem der Ansprüche 1 bis 8, wobei die über den Umfang verteilte Bohrungen (9) in der Buchse (8) ausgebildet sind.

10. Antriebsstrang (20), aufweisend eine elektrische Maschine (21) und ein Planetengetriebe (1) nach einem der Ansprüche 1 bis 9, wobei ein Rotor (22) der elektrischen Maschine (21) kraftschlüssig und/oder formschlüssig mit einer Welle des Planetengetriebes (1) verbunden ist.

11. Windkraftanlage (30) mit einem Planetengetriebe (1) nach einem der Ansprüche 1 bis 9 oder einem Antriebsstrang (20) nach Anspruch 10.

## Claims

1. Planetary transmission (1) having a transfer device (2) for transferring a supply medium between a first transmission part (11) of the planetary transmission (1) and a second transmission part (12) of the planetary transmission (1), wherein, during operation of the planetary transmission (1), the first transmission part (11) and the second transmission part (12) exhibit a rotational movement relative to one another and each at least partially form a part of the transfer device (2), wherein the transfer device (2) comprises an annular groove (3) on the surface (4) of the first transmission part (11) or on the surface (5) of the second transmission part (12), wherein the transfer device (2) comprises bores (9) which are distributed around the periphery, wherein the bores (9) distributed around the periphery are arranged opposite the annular groove (3), wherein the first transmission part (11) comprises a separate bush (8) for transferring the supply medium, said bush pointing toward the second transmission part, wherein a respective sealing groove (6) is formed in the bush (8) axially on both sides of the annular groove (3), wherein a respective sealing ring (7) is arranged in the sealing grooves (6), wherein the bush (8) is arranged in a rotationally fixed manner resting on the rest of the first transmission part (11),
**characterized in that**
the bush (8) is configured in floating form in an axial direction with a sufficient amount of play to tilt out of a relative position which is coaxial with the first transmission part (11) and/or with the second transmission part (12) to the extent of a relative movability of the respective sealing ring (7) within the associated sealing groove (6).

2. Planetary transmission (1) according to Claim 1, wherein the first transmission part (11) is arranged on the outside in relation to the second transmission part (12) at least in the region of the transfer device (2), wherein the bush (8) encloses a part of the second transmission part (12), wherein the sealing grooves (6) are arranged on the outer side of the bush (8).

3. Planetary transmission (1) according to Claim 1, wherein the first transmission part (11) is arranged on the inside in relation to the second transmission part (12) at least in the region of the transfer device (2), wherein the bush (8) is enclosed by a part of the second transmission part (12), wherein the sealing grooves (6) are arranged on the inner side of the bush (8).

4. Planetary transmission (1) according to one of Claims 1 to 3, wherein the planetary transmission (1) comprises a first transmission stage and a second transmission stage, wherein the planet carrier of the first transmission stage forms at least a part of the first transmission part (11), wherein the planet carrier of the second transmission stage forms at least a part of the second transmission part (12).

5. Planetary transmission (1) according to one of Claims 1 to 4, wherein a fixed transmission housing of the planetary transmission (1) forms at least a part of the first transmission part (11), wherein a transmission component, in particular a planet carrier, which rotates relative to the transmission housing forms at least a part of the second transmission part (12).

6. Planetary transmission (1) according to one of Claims 1 to 4, wherein the first transmission part (11) and the second transmission part (12) are embodied so as to be able to rotate relative to a fixed transmission housing of the planetary transmission (1).

7. Planetary transmission (1) according to one of Claims 1 to 6, wherein the first transmission part (11) and the second transmission part (12) are each at least partially formed by a cast part.

8. Planetary transmission (1) according to one of Claims 1 to 7, wherein the bush (8) is designed to be more ductile than the rest of the first transmission part (11) and/or than the second transmission part (12).

9. Planetary transmission (1) according to one of Claims 1 to 8, wherein the bores (9) distributed around the periphery are formed in the bush (8).

10. Drive train (20) comprising an electric machine (21) and a planetary transmission (1) according to one of Claims 1 to 9, wherein a rotor (22) of the electric machine (21) is connected to a shaft of the planetary transmission (1) in a force-fitting and/or form-fitting manner.

11. Wind turbine (30) having a planetary transmission (1) according to one of Claims 1 to 9 or a drive train (20) according to Claim 10.

## Revendications

1. Transmission planétaire (1) comportant un dispositif de transfert (2) servant au transfert d'un moyen d'alimentation entre une première partie de transmission (11) de la transmission planétaire (1) et une deuxième partie de transmission (12) de la transmission planétaire (1), la première partie de transmission (11) et la deuxième partie de transmission (12) présentant un mouvement relatif rotatif l'une par rapport à l'autre lors du fonctionnement de la transmission planétaire (1) et formant respectivement au moins partiellement une partie du dispositif de transfert (2), le dispositif de transfert (2) présentant une rainure annulaire (3) sur la surface (4) de la première partie de transmission (11) ou sur la surface (5) de la deuxième partie de transmission (12), le dispositif de transfert (2) présentant des alésages (9) répartis sur la périphérie, les alésages (9) répartis sur la périphérie étant disposés en regard de la rainure annulaire (3), la première partie de transmission (11) présentant une douille séparée (8), orientée vers la deuxième partie de transmission, servant au transfert du moyen d'alimentation, une rainure d'étanchéité (6) étant formée respectivement dans la douille (8) axialement des deux côtés de la rainure annulaire (3), une bague d'étanchéité (7) étant disposée respectivement dans les rainures d'étanchéité (6), la douille (8) étant disposée de manière à reposer de manière bloquée en rotation sur la première partie de transmission (11) restante, **caractérisée en ce que**
la douille (8) est réalisée de manière flottante dans la direction axiale avec un jeu suffisant pour le basculement hors d'une position relative coaxiale à la première partie de transmission (11) et/ou à la deuxième partie de transmission (12) dans la mesure d'une mobilité relative de la bague d'étanchéité (7) respective à l'intérieur de la rainure d'étanchéité (6) associée.

2. Transmission planétaire (1) selon la revendication 1, la première partie de transmission (11) étant disposée à l'extérieur par rapport à la deuxième partie de transmission (12) au moins dans la région du dispositif de transfert (2), la douille (8) entourant une partie de la deuxième partie de transmission (12), les rainures d'étanchéité (6) étant disposées sur le côté extérieur de la douille (8).

3. Transmission planétaire (1) selon la revendication 1, la première partie de transmission (11) étant disposée à l'intérieur par rapport à la deuxième partie de transmission (12) au moins dans la région du dispositif de transfert (2), la douille (8) étant entourée par une partie de la deuxième partie de transmission (12), les rainures d'étanchéité (6) étant disposées sur le côté intérieur de la douille (8).

4. Transmission planétaire (1) selon l'une des revendications 1 à 3, la transmission planétaire (1) présentant un premier étage de transmission et un deuxième étage de transmission, le porte-satellites du premier étage de transmission formant au moins une partie de la première partie de transmission (11), le porte-satellites du deuxième étage de transmission formant au moins une partie de la deuxième partie de transmission (12) .

5. Transmission planétaire (1) selon l'une des revendications 1 à 4, un carter de transmission fixe de la transmission planétaire (1) formant au moins une partie de la première partie de transmission (11), un composant de transmission tournant relativement au carter de transmission, en particulier un porte-satellites, formant au moins une partie de la deuxième partie de transmission (12).

6. Transmission planétaire (1) selon l'une des revendications 1 à 4, la première partie de transmission (11) et la deuxième partie de transmission (12) étant réalisées de manière à pouvoir tourner relativement à un carter de transmission fixe de la transmission planétaire (1) .

7. Transmission planétaire (1) selon l'une des revendications 1 à 6, la première partie de transmission (11) et la deuxième partie de transmission (12) étant formées respectivement au moins partiellement par une pièce coulée.

8. Transmission planétaire (1) selon l'une des revendications 1 à 7, la douille (8) étant conçue de manière à être plus ductile que la première partie de transmission (11) restante et/ou que la deuxième partie de transmission (12).

9. Transmission planétaire (1) selon l'une des revendications 1 à 8, les alésages (9) répartis sur la périphérie étant formés dans la douille (8).

10. Chaîne cinématique (20), présentant une machine électrique (21) et une transmission planétaire (1) selon l'une des revendications 1 à 9, un rotor (22) de la machine électrique (21) étant relié à force et/ou par complémentarité de formes à un arbre de la transmission planétaire (1).

11. Éolienne (30) comportant une transmission planétaire (1) selon l'une des revendications 1 à 9 ou une chaîne cinématique (20) selon la revendication 10.
